# EUROPEAN PATENT APPLICATION

(11) **EP 3 608 773 A1**
(43) Date of publication of application: **12.02.2020**
(21) Application number: 18188120.2
(22) Date of filing: 09.08.2018
(51) Int. Cl.: G06F 8/35, G06F 8/10, G06F 8/65, G06F 9/445, H04L 29/08

(54) **METHOD FOR PROVIDING AN AUTOMATIC SOFTWARE DEVELOPMENT/GENERATION AND DEPLOYMENT FUNCTIONALITY IN AT LEAST ONE VEHICLE AND CORRESPONDING BACKEND SERVER SYSTEM**

(71) Applicant: AUDI AG, 85045 Ingolstadt (DE)
(72) Inventor: THURIMELLA, Anil, 80995 München (DE)

(57) **Abstract**

The invention is concerned with a method (19) for providing a new software-based functionality (F) in at least one vehicle (12). The method (19) comprises the following steps: a digital model generation engine (23) generates a functionality model (24) of the functionality (F) on the basis of requirement data (20) that describe at least one requirement (21) that is to be fulfilled by the new functionality (F); a digital model transformation engine (25) transforms the functionality model (24) into a software code (18); a digital testing engine (26) generates at least one virtual testing scenario (27) on the basis of the functionality model (24) and verifies correct fulfillment of the at least one requirement (21) by the software code (18); and an update system (28) and/or function-on-demand system installs the software code (18) in the at least one vehicle (12) using a remote update connection (14).

## Description

The invention is concerned with a method for providing a an automatic software development and/or generation functionality in at least one vehicle. The software code implementing the functionality is generated outside the at least one vehicle and transferred into the at least one vehicle by means of an update system or function-on-demand system. The invention also comprises a backend server system that is designed to perform the inventive method.

A backend server system for vehicles may be used for online services, like e.g. route planning for navigation and/or providing real time traffic data.

In connection with the removal of errors or bugs in a software-based functionality of a vehicle, DE 10 2016 225 425 A1 discloses a method for observing an a-typical behavior of a functionality of a vehicle by means of a backend server system. If such an a-typical behavior is observed, the vehicle component that is running the corresponding software is put into a secure mode and parameters of the vehicle components may be adapted on the basis of a problem solution database. Implementing a new functionality is not possible with this method.

Document DE 10 2016 210 994 A1 describes a method for configuring a vehicle component by means of a backend server system. This backend server system may configure at least one vehicle component in order to influence the functionality of the vehicle component. However, the necessary data need to be provided by an operator. In other words, an automatization of adaptation of the functionality of a vehicle component is not possible.

In a publication written by M. Voelter et al. (Voelter M., Salzmann C., Kircher M. (2005) Model Driven Software Development in the Context of Embedded Component Infrastructures. In: Atkinson C., Bunse C., Gross HG., Peper C. (eds) Component-Based Software Development for Embedded Systems. Lecture Notes in Computer Science, vol 3778. Springer, Berlin, Heidelberg), a method is described for automatically generating software codes on the basis of a functionality model. This method may help generating software code automatically. However, which functionality this software code shall provide, must still be determined by an operator.

It is an object of the present invention to provide a new software-based functionality in at least one vehicle.

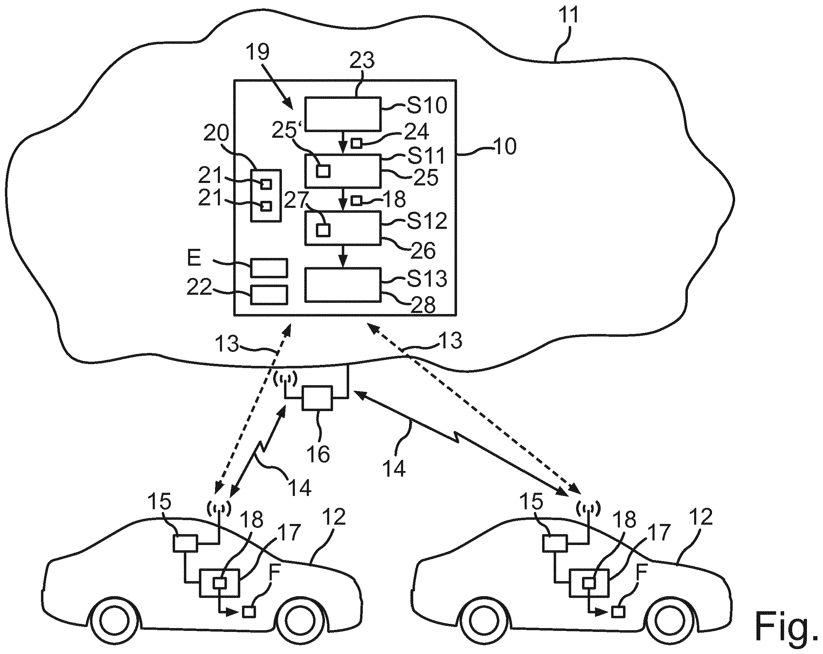

The object is achieved by the subject matter of the independent claims. Advantageous embodiments of the invention are described in the dependent claims, the following description and the figure.

The invention provides a method for providing a new software-based functionality in at least one vehicle. The functionality is "new" in the sense that the functionality does not exist in this form in the at least one vehicle at the beginning or when the method is started. The method may be performed by a backend server system, i.e. a server system that is located outside the at least one vehicle.

According to the method, a digital model generation engine generates a functionality model of the functionality on the basis of requirement data that describes at least one requirement that is to be fulfilled by the new functionality. In other words, what is to be provided for performing the method is at least one requirement that describes how the new functionality shall behave or operate. The at least one requirement is summarized by the requirement data. Starting from the requirement data the digital model generation engine generates a functionality model that may be used as a basis for generating software code.

In a second step a digital model transformation engine transforms the functionality model into a software code. Such a digital model transformation engine can be taken from the prior art as has been described in the introduction of this specification. In a further step, a digital testing engine generates at least one virtual testing scenario on the basis of the functionality model and verifies correct fulfillment of the at least one requirement by the software code. In other words, the functionality model is used not only for generating the software code itself, but also for generating at least one virtual testing scenario for the software code, that is testing data that may be applied to or processed by the software code in order to generate a processing result. This processing result can be compared with the at least one requirement in order to detect or verify correct fulfilment of the at least one requirement. For this comparison, the testing data may also comprise reference output data that represent the correct output result. The digital testing engine may be derived from a digital model transformation engine in the sense that instead of generating software code, testing data may be generated that provides both input data for the software code and reference output data that describes what the software code should generate, if the software code correctly fulfils the at least one requirement.

In a further step, a update system and/or function-on-demand system installs the software code in the at least one vehicle using a remote update connection. Such an update and/or function-on-demand system may be taken from the prior art where techniques of software updates for existing functions and/or software extensions are known. By using such an update and/or function-on-demand system, the generated and verified software code may be transferred into the at least one vehicle and may be installed and/or started in the at least one vehicle automatically. Thus, the user may store the software code in a configuration management system in the backend server system so that it can be installed in more than one vehicle that the user uses.

The invention provides the advantage that after providing a list of requirements, that is the at least one requirement in the form of requirement data, the corresponding software code may be generated and automatically tested and installed in the at least one vehicle. If the at least one requirement, that is the requirement data, is provided by a respective user of the at least one vehicle, this method makes it even possible that the at least one user may program the own vehicle without the need of writing the software code and testing the software code or ordering the software code from a programmer or a company.

The said digital model generation may be based on a software module. Likewise, the digital model transformation engine may be based on a software module. The digital testing engine may be based on a software module. The update and/or function-on-demand system may comprise a communication unit for transferring the software code to the at least one vehicle via the internet and/or a radio connection, e.g. a cellular phone network connection and/or a WIFI connection.

The invention also comprises additional embodiments, that provide for additional technical advantages.

In one embodiment, the requirement data describe the at least one requirement on the basis of at least one WHEN-THEN-statement. In other words, a requirement may comprise the statement "WHEN at least one predefined condition is fulfilled" "THEN at least one predefined output shall be generated". The at least one condition may describe a respective input signal that may be available in the at least one vehicle. The at least one output may comprise a respective control signal for activating at least one actuator available in the vehicle. For example, a requirement may state "when the rain sensor indicates presence of rain then music from a specific playlist shall be played". Using WHEN-THEN-statements provides the advantage that a user who provides the at least one requirement is forced to provide an advantageous structure for stating the at least one requirement, such that the generation of the functionality model may be automatized by means of a digital model generation engine with less effort and/or more reliably.

In one embodiment, the functionality model is based on a so called formal notation or formal logic. For example, the so-called z-notation and/or a first order logic may be used. However, Z-notation and first order logic are examples only. The advantage is that these models may be transformed into a unique mathematical model without ambiguity. The consistency and correctness of the requirements may be checked automatically, i.e. without the presence of a human operator. An operation may specify in formal logic or natural language text may be transformed into formal model by using a natural language processing unit and a machine learning engine as commented below. Notifying the at least one requirement in a functionality model on the basis of at least one of these notification techniques thus allows for automating the transformation of the functionality model in a software code (automatic programming).

In one embodiment, the said digital model transformation engine is based on a machine learning engine. A machine learning/deep learning engine may have an artificial neural network (ANN) as a possible item in the machine learning engine. A machine learning engine in addition to a natural language processing unit can resolve a possible ambiguity in the specifications (e.g. natural language specifications) and transform a natural language requirement from text/speech/video to a formal model (e.g. z-notation, first order logic). This has proven advantageous as the model transformation engine may adapt its transformation behavior or its transformation rules as a function or in reaction to at least one error that may be comprised in the software code. For example, such an error may be discovered by the digital testing engine and may be fed back into the model transformation engine for feedback learning. In other words, the machine learning engine may adapt the way of transforming the functionality model into software code in dependence on error data describing an erroneous transformation.

In one embodiment, an editor is provided which is designed to receive the at least one requirement at least partially from an operator. In other words, a human operator may provide input for describing the at least one requirement. The editor may support requirement patterns and/or templates so that the formulation may be done quickly. By means of such an editor a template may be provided for entering a WHEN-THEN-statement for each requirement. An editor provides the advantage that a human machine interface is available for entering the at least one requirement.

In one embodiment, the at least one requirement is derived at least partially from at least one user message that a respective user provides and that describes the at least one requirement on the basis of a natural language text. In other words, the user is not required to provide the at least one requirement in a special form, e.g. as a WHEN-THEN-statement. The user may rather use natural language, i.e. language like it may be used when talking to other persons. This simplifies the entering of the at least one requirement.

In one embodiment, the at least one requirement for the new functionality is extracted from the natural language text by a speech recognizer and/or a language translator and/or a machine learning engine. If a speech recognizer is used, the natural language text may even be entered verbally by the user, i.e. the user may speak the natural language text and thus state the at least one requirement. A language translator may be adapted in such a way that the natural language text may be translated into at least one WHEN-THEN-statement. Thus, transferring the natural language text into WHEN-THEN-statement may be automated. A machine learning engine may extract the at least one requirement from the natural language text on the basis of training material. A machine learning engine provides the additional advantage that interpretation of the natural language text may be personalized in that user-specific ways of expressing at least one requirement may be learned or recognized by the machine learning engine. In other words, this enables the adaptation of the machine learning engine to user-specific ways of expressing at least on requirement. This reduces the error probability.

In one embodiment, the at least one requirement is derived at least partially from at least one fog computing network to which the at least one vehicle is connected. In other words, the at least one vehicle is a member or a note or component in the at least one fog computing network. The at least one fog computing network detects at least one software bug in the at least one vehicle. In other words, the at least one vehicle is observed by the at least one fog computing network. Particularly, not several, but only one common fog computing network is used for the at least one vehicle. The at one requirement is derived from the at least one detected bug. In other words the at least one requirement describes a condition or state of the at least one vehicle that would be present, if the at least one software bug was absent. This can be achieved by describing the inverse of the observed state of the at least one vehicle. By generating the at least one requirement as a reaction to at least one software bug that is observed by the at least one fog computing network, the at least one software bug may be removed from the at least one vehicle in an automated fashion by providing corrected software code.

In one embodiment, the software code, that is generated from the functionality model, is designed to implement the new functionality on the basis of independent function modules that are installed in the at least one vehicle independently. In other words, the software code is not monolithic in the sense that the whole software code is to be present in the at least one vehicle before any software function may be run in the respective vehicle. Instead, the functionality is split into a plurality of independent function modules that may be installed and operated in the respective vehicle independently from each other. This allows for stepwise implementation of the functionality and module-wise exchange of function modules, for example for the purpose of removing or updating an erroneous function module without the need to exchange the complete software code of the whole functionality. Such a process is called continuous deployment that is the functions are deployed one after the other continuously.

For performing the inventive method, the invention also provides a backend server system comprising at least one processing unit which is designed to perform an embodiment of the inventive method. The backend server system may be based on a central computer server, e.g. an internet server, or a network of several of such computers and/or a cloud computing system and/or a distributed fog computing system. The at least one processing unit may comprise at least one microprocessor. Such a backend may provide computational power to transform the requirements into code and test it automatically. Later, the generated core/deployment packets may be stored in a configuration management system within a user account of the user. The value is to have a baseline copy and to be able to install in other vehicles that the user uses.

One main advantage is that the development and delivery process is quick. For example, an operator or user may get his functions within few minutes/hours while the current development takes few years to add main changes in the vehicle software. Another benefit is it is that the development and operational costs would be reduced as very little human resources are involved. In addition to this, the quality of functionality improves because of little possibility for human errors. Furthermore, this will provide a paradigm change that an operator or user may program his own vehicle based on his needs instead of buying a vehicle that is meant for general purpose.

The invention also comprises the combinations of the features of the describes embodiments.

In the following, an implementation example of the invention is described. The single figure illustrates:
- Fig.: a schematic illustration of a backend server system according to the invention performing an embodiment of the inventive method.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figure identical reference signs indicate elements that provide the same function.

The figure (Fig.) shows a backend server system 10, that may be implemented as an internet server of the internet 11 or a cloud server system or an edge computing system. At least one vehicle 12 may be connected to the backend server system 10 over a respective communication path 13. The communication path 13 may comprise a respective radio connection 14 between a communication unit 15 of the respective vehicle 12 and a communication network 16 that may be connected to the internet 11. A communication unit 15 and the communication network 16 may be based on a mobile communication technology, e.g. GSM, UMTS, 5G, or on the basis of a WIFI technology. Each vehicle 12 may comprise an electronic control unit 17 that may be designed to execute software code 18 which may provide a functionality F in vehicle 12 when executed by the control unit 17. As an example for a functionality, an infotainment system may be controlled as a function or in dependence on a sensor signal of the vehicle. For example, a predefined playlist may be used for playing music when a sensor, e.g. a rain sensor signals a predefined condition, e.g. the presence of rain. In general, a functionality may be a link between at least one input signal (e.g. rain sensor signal, vehicle speed signal) on one side and at least one control signal (e.g. a respective control signal for at least one actuator) on the other side. The logic for this link is provided by the functionality stating at least one condition (WHEN-condition) when the at least one control signal shall be output.

For implementing the software code, a method 19 may be performed by the backend server system 10 which allows for automatically generating the software code 18 in reaction to requirement data 20 that describes at least one requirement 21 that the functionality F shall fulfil in the at least one vehicle 12. For example, the requirements 21 may be listed by a respective user of the at least one vehicle 12, e.g. in a natural language text 22 that a user may provide as a spoken message or as a written message with the backend server system 10. In a step S10 a digital module generation engine 23 may generate a functionality model 24 of the functionality F on the basis of the requirement data 20 that describes that at least one requirement 21 that is to be fulfilled by the new functionality F. In a step S11, a digital model generation engine 25 may transform the functionality model 24 into the software code 18. In a step S12, a digital testing engine 26 may generate at least one virtual testing scenario 27 on the basis of the functionality model 24 and may verify correct fulfilment of the at least one requirement 21 on by the software code 18. The at least one virtual testing scenario may comprise input data and reference output data, wherein for correct fulfilment of the at least one requirement 21 the software code should when processing the input data provide output data corresponding to the reference output data. In a step S13, a digital update system 28 may install the software code 18 in the at least one vehicle 12 using a remote update connection that may be based on the communication paths 13.

The implementation of a new functionality F is based on the following points:
- Specify the software requirement 21 for the vehicle 12 directly in the backend server system 10 based on requirement data that provides a data set with the requirements. The requirements may be formulated in a requirement language (e.g. formal method).
- Automatically develop and test the software code 18 within the backend server system 10 based on deep learn and/or model based software engineering technique. The deep learning technique may be implemented as a deep learning engine which may transform the functionality model into software code and/or virtual scenario testing data.
- The new software code for the new functionality F may be updated and/or installed to the vehicle 12 based on online updates.

Thus, only requirements need to be managed, e.g. manually, while all the remaining steps S10 to S13 such as development, testing deployment and vehicle delivery may be automated. Based on this concept, significant costs would be reduced. The vehicles 12 may be provided cheaper and/or an increased profit margin for the producer of vehicles 12 is available.

Starting from requirements 21 to delivering the software code 18 to the at least one vehicle 12 may be performed in less than 24 hours, i.e. less than one day. Also, edge and/or fog computing may be used, such that vehicles 12 themselves may provide data sets with requirements 21 which can maybe directly taken as a basis to fix software bugs and/or provide a specific new functionality F. In addition to an online service, backend technologies may also be used for software development itself as its shown on the example of method 19. Human/environment critical bug fixes and/or features may thus be brought to a vehicle 12 in a shorter time than on the basis of manual programming. This can be essential in the case of automatically driving vehicles 12. The functional development for the vehicle 12 may also be personalized as well. An end-user of vehicle 12 may specify and/or order a new functionality F for the own vehicle 12 directly by means of the natural language text 22.

The described backend server system 10 may work based on the following additions to a traditional vehicle 12 and a traditional backend environment: An editor E may be provided to specify requirements 21 in the backend server system 10 based on data sets and/or software specification methods, such as formal methods. A model transformation engine 25 may be enhanced by a deep learning engine 25' within the backend server system 10 in order to develop and test features automatically. The model transformation engine 25 may use software code templates that represent a WHEN-condition or a THEN-condition. For example, in a requirement 21, a WHEN-THEN-statement may be recognized. For the WHEN-condition, an association connecting the text of the WHEN-condition to a predefined software code template may be searched in a data base or data set. Accordingly, for the THEN-output the text of the THEN-output may be associated with a corresponding software code template stored in the data base or data set. Then, by combining the two software code templates, the software code for implementing the requirement 21 is available.

The automated software development functionality as implemented by method 19 may be integrated with an online update or functionality-on-demand system.

The example shows how a backend-based embedded software development may be provided. The end user is able to program the own car. The backend server system provides the computational resources to automatically generate software from specifications / requirements given by the user.

## Claims

1. Method (19) for providing a new software-based functionality (F) in at least one vehicle (12), **characterized in that**
- a digital model generation engine (23) generates a functionality model (24) of the functionality (F) on the basis of requirement data (20) that describe at least one requirement (21) that is to be fulfilled by the new functionality (F);
- a digital model transformation engine (25) transforms the functionality model (24) into a software code (18);
- a digital testing engine (26) generates at least one virtual testing scenario (27) on the basis of the functionality model (24) and verifies correct fulfillment of the at least one requirement (21) by the software code (18); and
- an update system (28) and/or function-on-demand system installs the software code (18) in the at least one vehicle (12) using a remote update connection (14).

2. Method according to claim 1, wherein the requirement data (20) describe the at least one requirement (21) on the basis of at least one WHEN-TH EN-statement.

3. Method (19) according to any of the preceding claims, wherein the functionality model (24) is based on automatic programming and/or a formal notation, in particular a first order logic and/or a z-notation.

4. Method (19) according to any of the preceding claims, wherein the digital model transformation engine (25) is based on a machine learning engine (25').

5. Method (19) according to any of the preceding claims, wherein an editor (E) is provided which is designed to receive the at least one requirement (21) at least partially from an operator.

6. Method (19) according to any of the preceding claims, wherein the at least one requirement (21) is derived at least partially from at least one user message that a respective user provides and that describes the at least one requirement (21) on the basis of a natural language text (22).

7. Method (19) according to claim 6, wherein the at least one requirement (21) is extracted from the natural language text (22) by an automatic speech recognizer and/or a language translator and/or a machine learning engine.

8. Method (19) according to any of the preceding claims, wherein the at least one requirement (21) is derived at least partially from at least one fog computing network to which the at least one vehicle (12) is connected and that detects at least one software bug in the at least one vehicle (12), wherein the at least one requirement (21) is derived from the at least one detected software bug.

9. Method (19) according to any of the preceding claims, wherein the software code (18) is designed to implement the functionality (F) on the basis of independent function modules that are installed in the at least one vehicle (12) independently from each other.

10. Backend server system (10) comprising at least one processing unit which is designed to perform a method (19) according to any of the preceding claims.
